Europäisches Patentamt

European Patent Office

Office européen des brevets

(19)

(11) Publication number: **0 361 366**
**A2**

(12) **EUROPEAN PATENT APPLICATION**

(21) Application number: 89117686.9

(51) Int. Cl.5: **G06F  15/20**

(22) Date of filing: 25.09.89

(30) Priority: 26.09.88 JP 241298/88

(43) Date of publication of application:
04.04.90 Bulletin 90/14

(84) Designated Contracting States:
**DE GB**

(71) Applicant: **SHARP KABUSHIKI KAISHA**
**22-22 Nagaike-cho Abeno-ku.**
**Osaka(JP)**

(72) Inventor: **Kuga, Shigeki**
**2-15-15, Nishichiyogaoka**
**Nara-shi Nara-ken(JP)**
Inventor: **Morishita, Taro**
**4-13-1, Nagamodai Kamo-cho**
**Soraku-gun Kyoto(JP)**
Inventor: **Wada, Masahiro**
**1-10-31, Shijyo-oji**
**Nara-shi Nara-ken(JP)**
Inventor: **Kanza, Hiroyuki**
**1-2-3-204, Kabutodai Kizu-cho**
**Soraku-gun Kyoto(JP)**
Inventor: **Onishi, Satoshi**
**Tama-dormitory 2-29-3, Utsukushigaoka**
**Midori-ku**
**Yokohama-shi Kanagawa-ken(JP)**

(74) Representative: **TER MEER - MÜLLER -**
**STEINMEISTER & PARTNER**
**Mauerkircherstrasse 45**
**D-8000 München 80(DE)**

(54) **Device for supporting document preparation.**

(57) Disclosed is a device for supporting document preparation comprising an input device (8) for inputting character strings, a display device (5) for displaying the character strings inputted by the input device (8), a storage device (10) for storing the character strings inputted by the input device (8), a knowledge base (9) for storing knowledge for producing guide lines used in preparing documents, a document base (1) for storing basic elements in compositions, and a control device (11) for controlling the input device (8), the display device (5), the storage device (10), the knowledge base (9) and the document base (1), the control device (11) comprising a concept production module (14) for producing a guide line used in preparing documents using the knowledge stored in the knowledge base (9) on the basis of the character strings inputted from the input device (8), a document preparation module for calling out the basic elements in the compositions stored in the document base and supporting the preparation of a document in accordance with the guide line produced by the concept production module (14), a schedule management module (15) for managing a schedule used in preparing documents in accordance with the guide line produced, and a planning and design module (12) for planning and designing an entire construction of the document in accordance with the guide line produced.

# F I G . 1

10 — STORAGE MEANS

11

1 — DOCUMENT BASE

KNOWLEDGE BASE — 9

2 — CONVERSION MEANS

INPUT MEANS — 8

CONTROL
MEANS

3 — COMMUNICATION MEANS

OUTPUT MEANS — 7

4 — PROOFREADING AND
REVISION MEANS

SCHEDULE MANAGEMENT
MEANS — 6

DISPLAY MEANS — 5

# DEVICE FOR SUPPORTING DOCUMENT PREPARATION

## BACKGROUND OF THE INVENTION

### 1. Field of the Invention

The present invention relates to a device for supporting document preparation for preparing documents described for a certain purpose such as office documents, manuals, articles and literary works. The documents which can be prepared by this device can correspond to multi-media including character strings as well as graphics or images, voices and the like.

### 2. Description of the Prior Art

Word processors for Japanese characters (referred to as Japanese word processors hereinafter) have been put to practical use. In the Japanese word processor, basic techniques such as Japanese word input/output, edit, kanakanji conversion algorithm and dictionary techniques have been established.

Moreover, basic techniques of a document processing system having the function of supporting proofreading and revision for compositions made by means such as a Japanese word processor have been established.

Furthermore, the basis of techniques for converting character strings into voices, or vice versa or converting character strings into graphics, or vice versa has been established.

In addition, the basis of communication techniques has been established in which a document prepared by a device can be converted into an electrical signal to be sent to another device and the devices can be controlled by each other.

Additionally, the basis of knowledge processing techniques has been established in which the knowledge and know-how can be stored as a knowledge base and utilized.

Additionally, a device for supporting document preparation capable of selecting a model, which suits a purpose (questions), of a document to be prepared using a Japanese word processor from items constituting the document by inputting the purpose therein, to present the model to a person who prepares documents has been known (see Japanese Patent Laid-Open No. 284457/1987).

Although description was made of the conventional techniques having document processing as its key consideration, techniques associated with a work station have been established except for the above described techniques. In the techniques, a device using a multi-window for raising the efficiency of work has been put to practical use.

The basis of techniques for preparing documents using the above described environment and function has been established.

In recent years, Japanese word processors have spread, so that a lot of documents have been prepared by the Japanese word processors. Japanese word processors capable of performing an input/output function and an edit function as well as proofreading and elaborating documents have been put to practical use and utilized in preparing documents.

However, the document processing device such as the conventional Japanese word processor does not have the function of providing support as to what and how to be written. Consider a case of preparing a manual by way of example so as to describe the device in more detail.

First, the conventional device uses a method of temporarily storing and preserving a document of a manual of a given device, which is prepared by a document processing device such as a Japanese word processor, and utilizing the document in preparing a manual of another new device in the future.

With the above described method, it is all left to a person who prepares the document to judge, for example, which portion of the document is to be utilized, which portion of the document is to be added or revised, and how the document is to be revised.

Moreover, in the conventional device, it is impossible to present only changed portions of the document or present the document while comparing the same with the conventional document.

Furthermore, the price of the manual is set as a part of commodities. Accordingly, in the conventional device, it is impossible to cope with the problem as to how the manual is to be prepared while observing restrictions on costs.

Additionally, there exists no processing means for coping with the problem as to how the manual is to be prepared while observing restrictions on human beings, matter and time, other than the restrictions on costs. Accordingly, the judgement and management are left to the person who prepares documents, or to other persons.

In addition, the conventional device has no function of supposing readers, writing different documents depending on the readers, and presenting the documents which are readily comprehensive to the readers.

Moreover, from the recognition that the manual is a part of commodities, the commodity strategy should be reflected in the process of preparing the manual. The conventional device, however, does not have such function.

Furthermore, the conventional device can perform a consistent function such as the function of inputting/outputting and editing documents, but has no consistent function of supporting the preparation of documents such as the function of planning, designing, preparing, proofreading, and laying out documents to suit some purpose.

More specifically, in the preparation of the manual, making of compositions, making of illustrations, editing, proofreading, and management of a schedule of the preparation and adjustment between experts are respectively assigned to a technical writer, an illustrator, an editor, an expert in proofreading, and a technical director. In many cases the manual is completed by cooperation between the above described several experts. The conventional device, however, has no function of cooperation, adjustment and unification between the processes.

The resultant problems are as follows.

For example, as in a case where a manual includes a lot of technical terms, the manual becomes incomprehensible to elementary readers who have no knowledge of the device.

Moreover, the manual, the estimate of which is exceeded or which cannot be prepared by the appointed day, becomes meaningless.

The manual, the preparation of which is assigned to a lot of experts, may be prepared or adjusted again for the lack of its uniformity, resulting in waste of time and money.

Description was made of the problems of the conventional device by taking the preparation of the manual as an example. The document should have readers and points of appeal, and a primary object of the document is to tell the readers the points of appeal exhaustively and efficiently. Accordingly, the above described problems are true for not only the preparation of the manual but also the preparation of all kinds of documents and the conventional document processing device.

The present invention has been made to solve the above described problems by causing the device to have a functional module for supporting planning and design of documents and have functions of producing a concept on the basis of the module and preparing documents on the basis of the concept in order to complete a document to be an object under the conditions for restrictions, thereby to support a series of processes of preparing documents.

## SUMMARY OF THE INVENTION

The present invention is directed to a device for supporting document preparation, comprising input means for inputting character strings, display means for displaying the character strings inputted by the input means, storage means for storing the character strings inputted by the input means, a knowledge base for storing knowledge for producing guide lines used in preparing documents, a document base for storing basic elements in compositions, and control means for controlling the input means, the display means, the storage means, the knowledge base and the document base, the control means comprising concept production means for producing a guide line used in preparing documents using the knowledge stored in the knowledge base on the basis of the character strings inputted from the input means, document preparation means for calling out the basic elements in the compositions stored in the document base and supporting the preparation of a document in accordance with the guide line produced by the concept production means, schedule management means for managing a schedule used in preparing documents in accordance with the guide line produced, and planning and design means for planning and designing an entire construction of the document in accordance with the guide line produced.

## BRIEF DESCRIPTION OF THE DRAWINGS

Fig. 1 is a block diagram showing a structure of a device for supporting document preparation according to the present invention;

Fig. 2 is a conceptional view of a functional block;

Fig. 3 is a general flow diagram of the functional block;

Fig. 4 is a schematic flow diagram of a concept production module in the functional block shown in Fig. 3;

Fig. 5_a is a diagram showing an example of the display of a question;

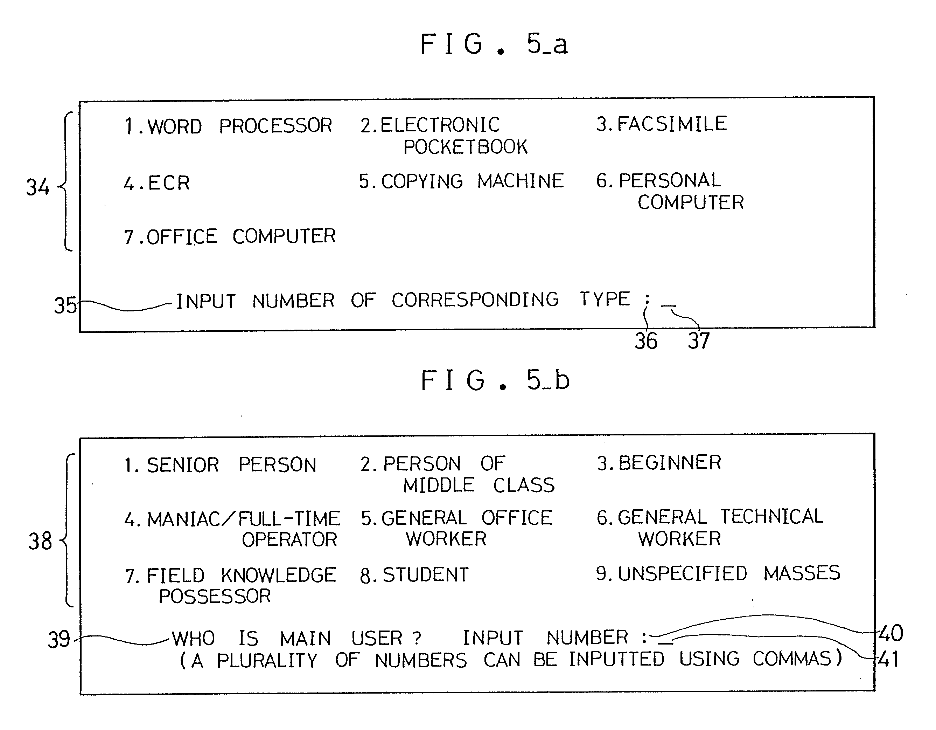

Fig. 5_b is a diagram showing another example of the display of a question;

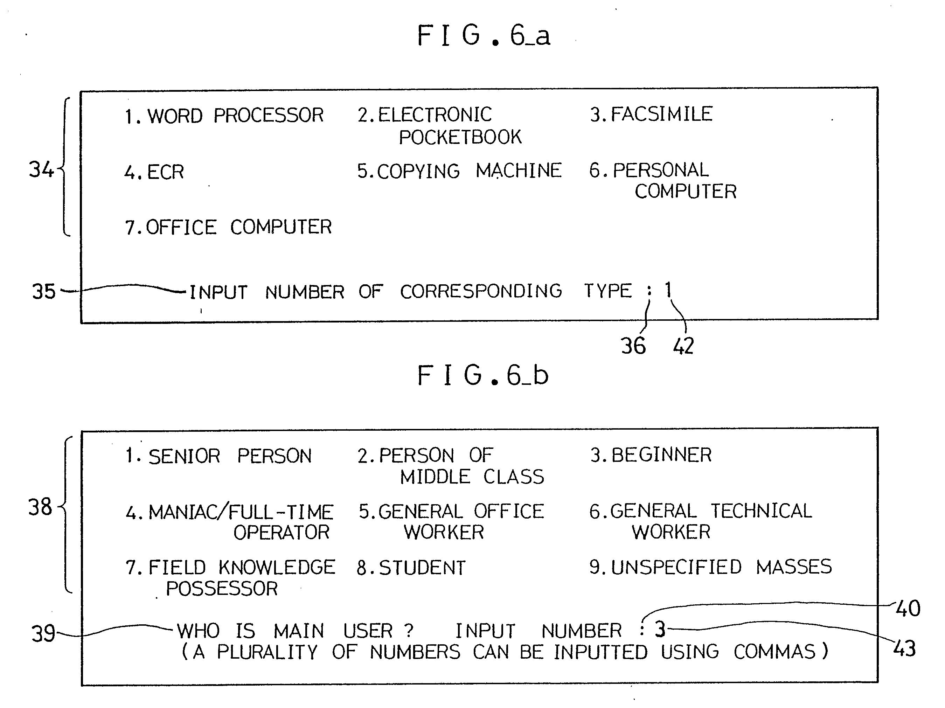

Figs. 6_a and 6_b are diagrams respectively showing display screens on which answers to the questions shown in Figs. 5_a and 5_b are inputted;

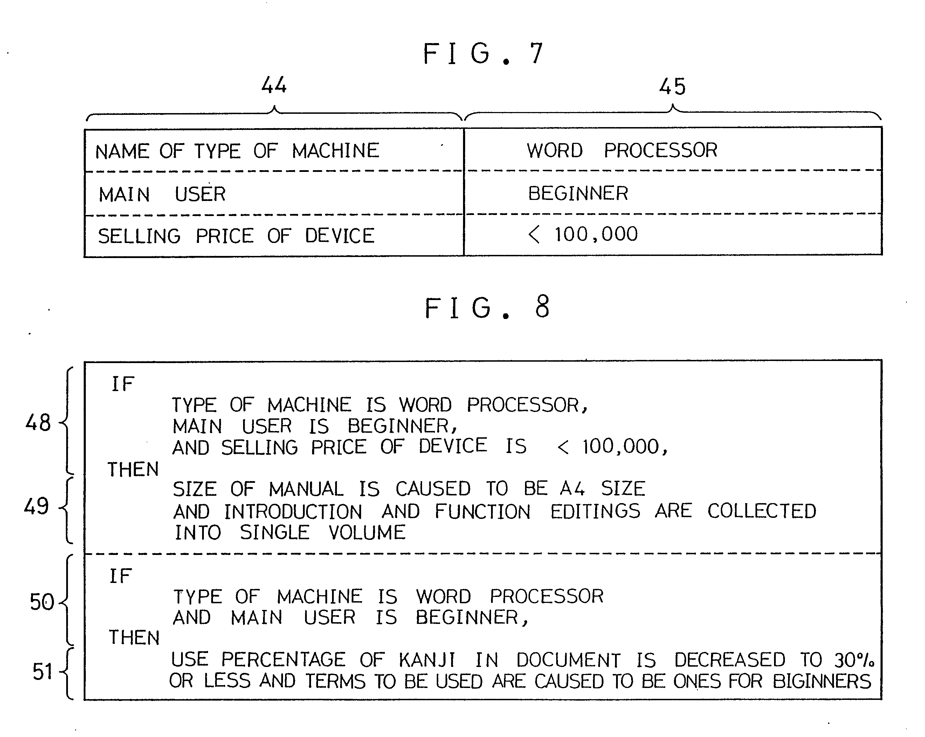

Fig. 7 is a conceptional view of a stack for storing the answers;

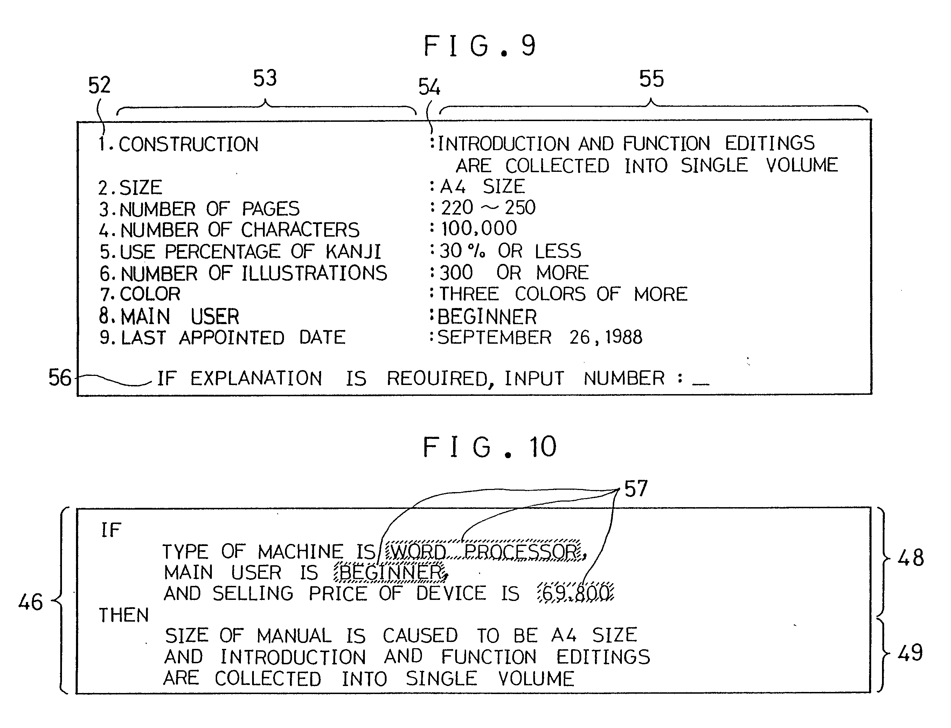

Fig. 8 is a diagram showing an example-of a knowledge base;

Fig. 9 is a diagram showing an example of a concept;

Fig. 10 is a diagram showing an example of the display of reasons;

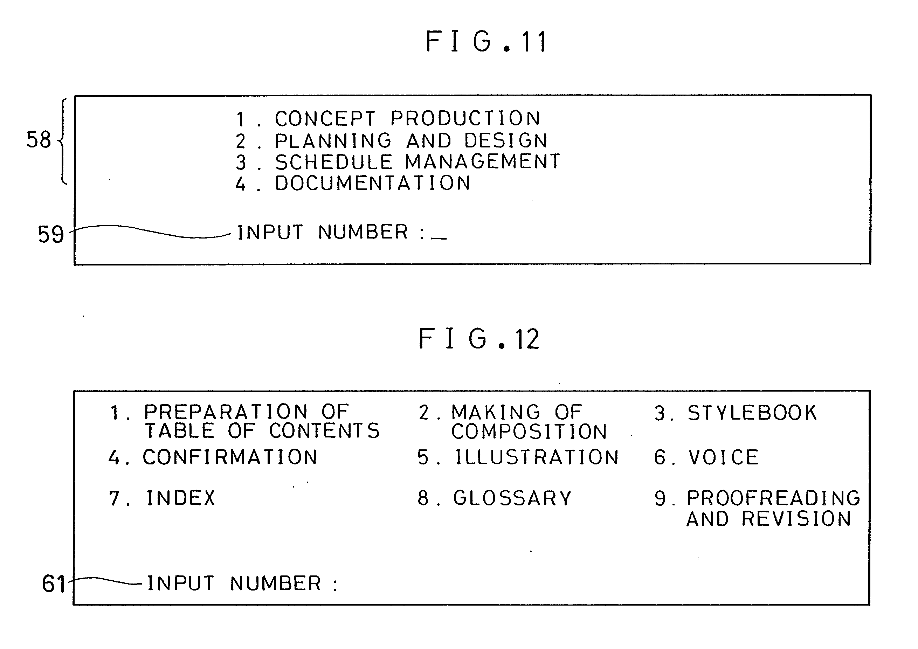

Fig. 11 is a diagram showing an example of a menu screen for selecting modules;

Fig. 12 is a diagram showing an example of a screen for setting work items;

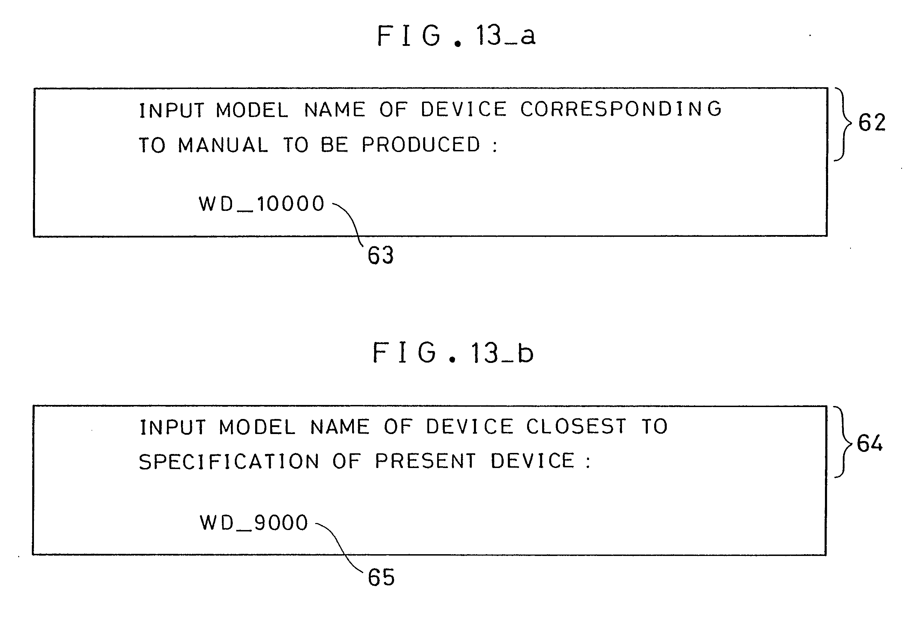

Figs. 13_a and 13_b are diagrams respectively showing examples of screens on which a model of a device corresponding to a document to be prepared and a model of a device closest to the device to be an object are inputted;

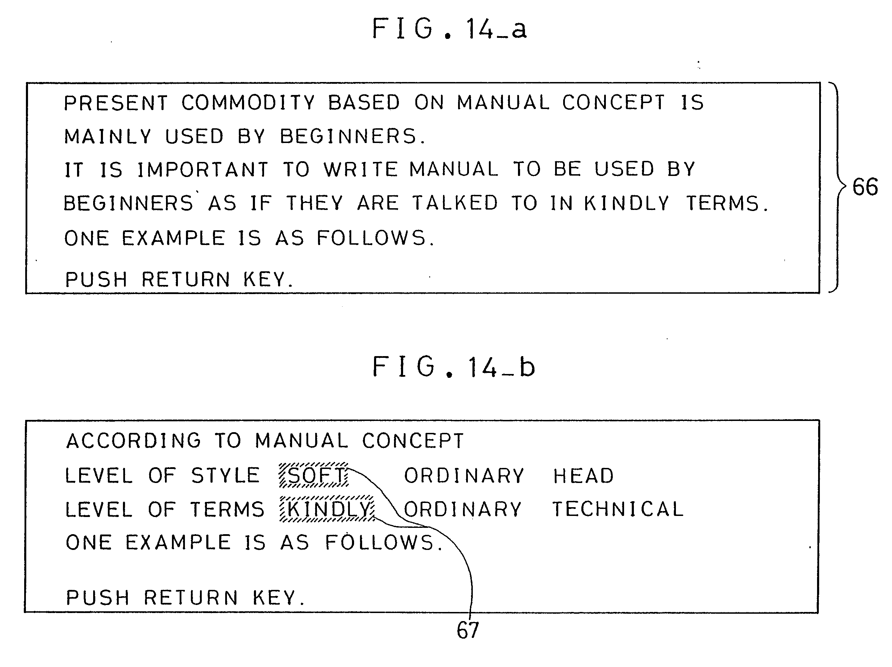

Figs. 14_a and 14_b are diagrams respectively showing examples of a guidance and setting of a level of expressions displayed on the basis of the concept;

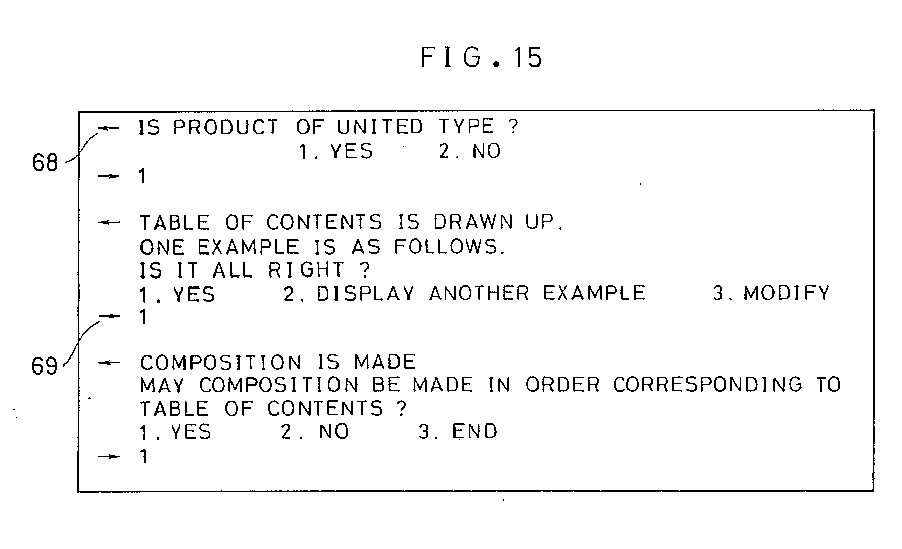

Fig. 15 is a diagram showing an example of a dialogue as to which portion of the document is to be prepared;

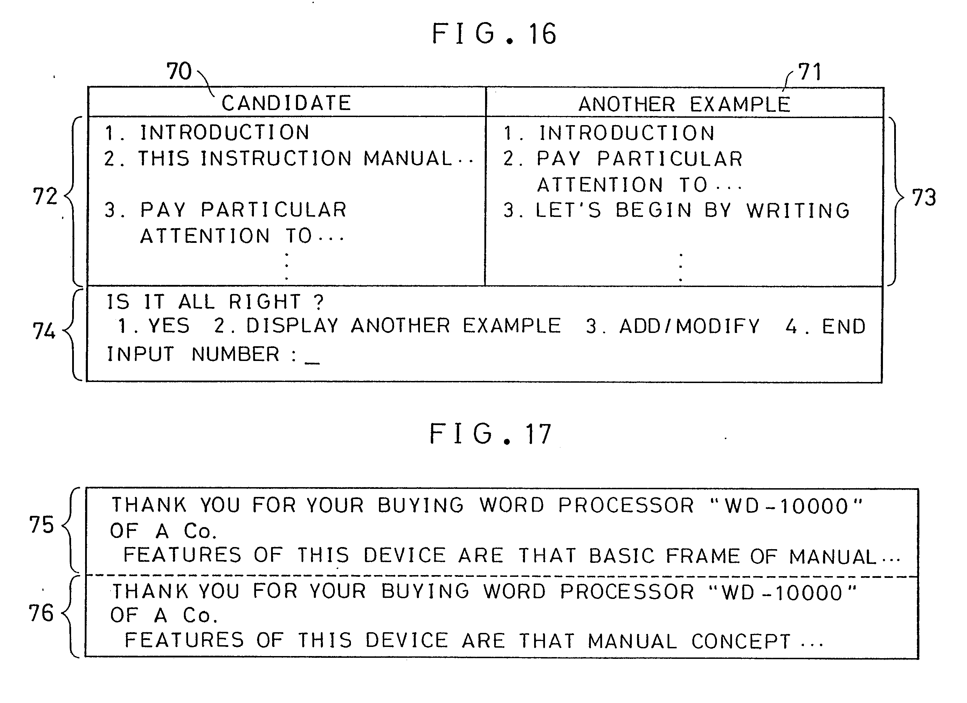

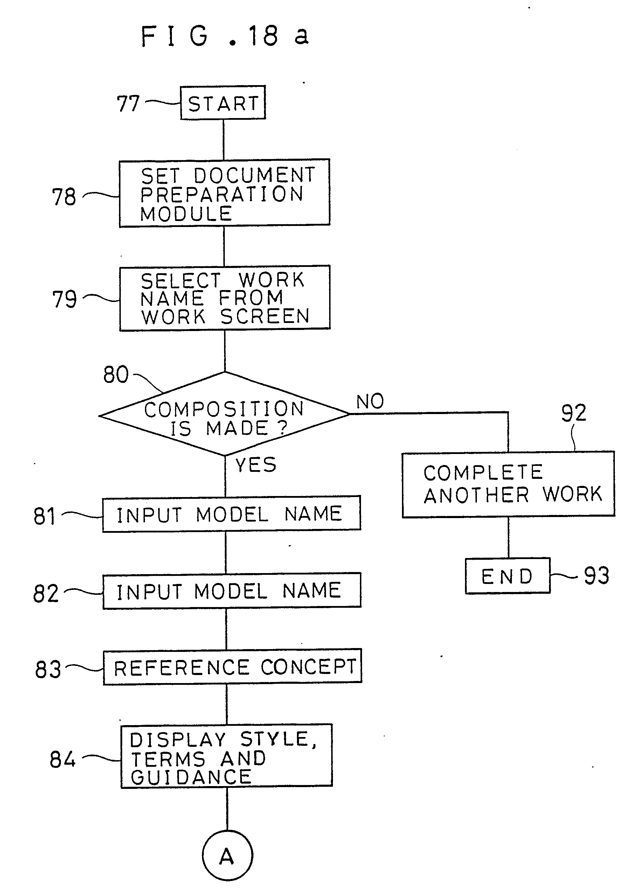

Fig. 16 is a diagram showing an example of candidates of a table of contents called out of a document base:

Fig. 17 is a diagram showing an example of a document called out of the document base and displayed;

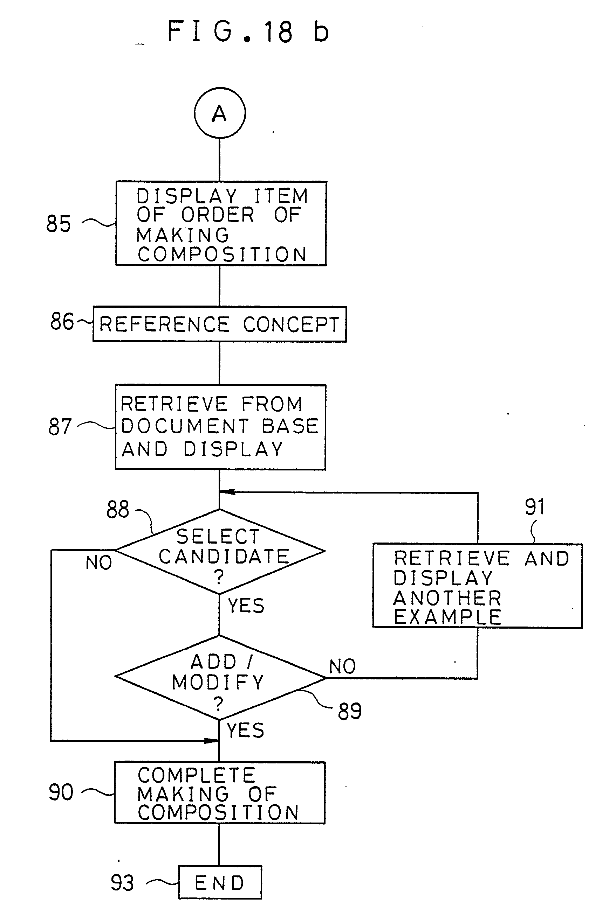

Figs. 18a and 18b are diagrams showing the detailed flow of work for preparing documents;

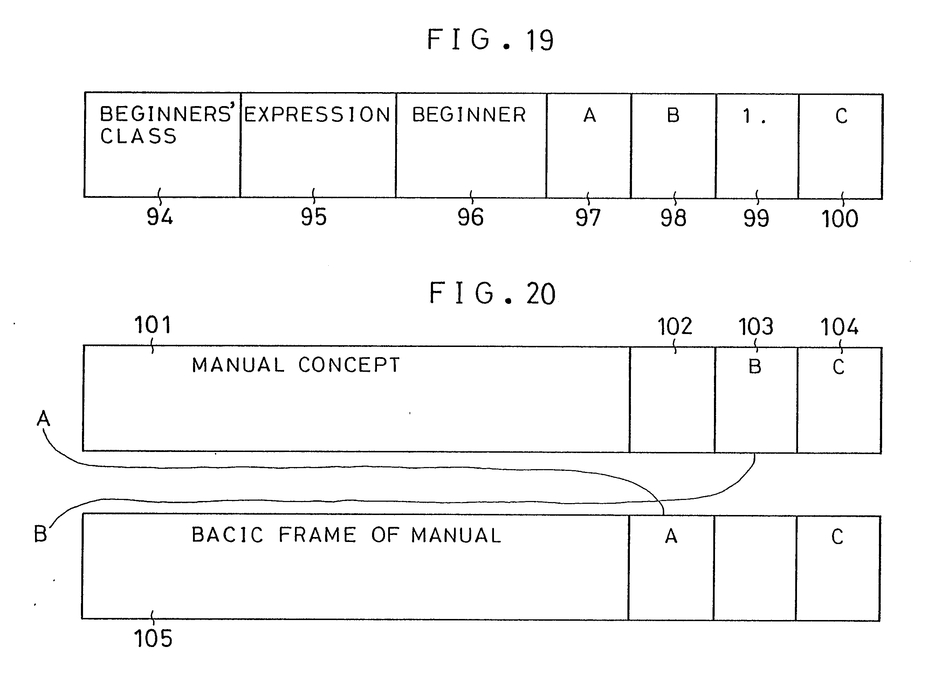

Fig. 19 is a diagram showing an example of storage of compositions in the document base; and

Fig. 20 is a conceptional view of storage of information on terms.

## DESCRIPTION OF THE PREFERRED EMBODIMENTS

A device for supporting document preparation according to the present invention may basically comprise means for outputting character strings, means for inputting and outputting graphics or images, means for inputting and outputting voices, means for displaying the graphics or images inputted by the above means, means for confirming the voices, means for editing the graphics or images and the voices inputted by tbe above means, means for storing the graphics or images and the voices inputted by the above means, communication means, means for mutually converting the graphics, the images and the voices inputted, means for proofreading and revising a prepared document, and means for managing a schedule.

A keyboard for inputting character strings may be typically used as the input means in the present invention. Moreover, the display means includes, for example, a CRT (cathode ray tube) display device and an LCD (liquid crystal display) device. A combination of RAM and ROM, a floppy disc device and the like may be used as the storage means.

A knowledge base in the present invention is basically of the same type as that used in an expert system and stores knowledge for producing guide lines used in preparing documents. The ROM, for example, may be used as the knowledge base.

The document base may comprise ROM storing a lot of basic elements in compositions having the same contents and having different expressions corresponding to a guide line produced by concept production means.

A microcomputer may be used as control means. The concept production means, document preparation means, schedule management means and planning and design means may be independently initiated and respectively comprise individual programs operated with being linked to each other by the guide line produced. Furthermore, the control means is adapted to contain a program for controlling graphic input means for inputting graphics or images, voice input means for inputting voices and the above described means. Consequently, the device for supporting document preparation according to the present invention can prepare documents corresponding to multi-media including character strings as well as graphics or images, voices and the like.

The operation of the device for supporting document preparation according to the present invention will be schematically described in the above described structure.

First, the concept production means is initiated, to hear the conditions for a document to be an object in a dialogue manner. If a user answers questions concerning the conditions from the device, a guide line, that is, a concept of documents is presented with reference to the answers and the knowledge base contained in the device. The answers and the concept are stored for the future use. The transition to another processing then occurs in response to an instruction of the user. For example, the document preparation means is started. In the document preparation means, the device provides support to select media which suits a purpose utilizing the stored concept and answers from the user, output candidates of compositions, terms, layout and the like from the document base to cause the user to select the candidates, and make compositions without modification or by partly revising the candidates.

When the transition to the schedule management means occurs, a module for inputting the conditions for restrictions on human beings, matter and time is initiated. Consequently, the device functions to present a schedule which suits the conditions for restrictions by inputting the above described conditions, thereby allowing a mutual relation between the above schedule and a schedule in each process for preparing documents to be confirmed.

In the planning and design means, the device functions to allow the amount of compositions in an entire manual. the assignment of the number of pages for each content, or the like to be planned and designed in accordance with the concept produced.

Using the above described means, the device for supporting document preparation according to the present invention functions to consistently prepare a document which suits the purpose.

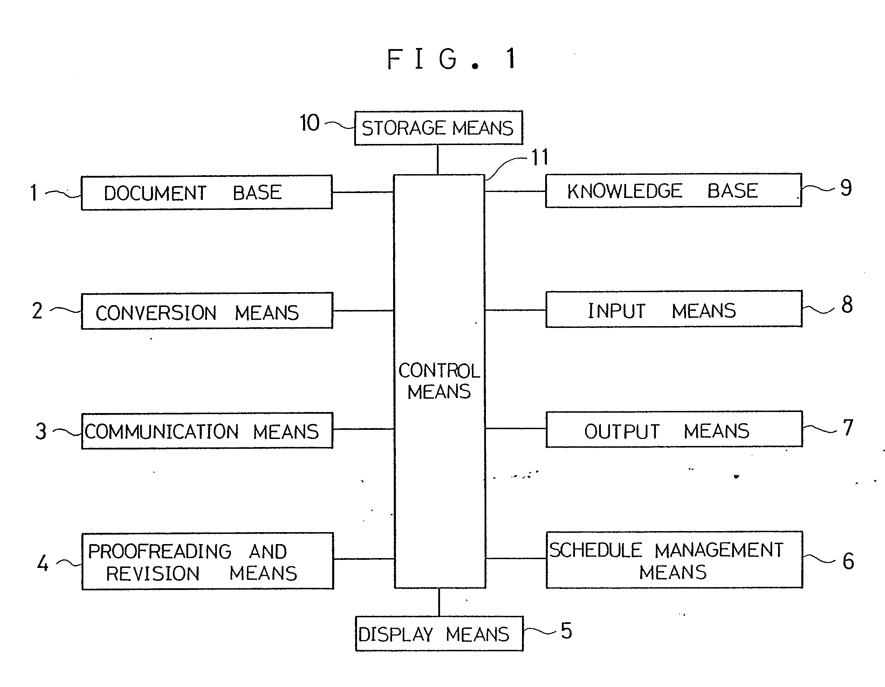

The present invention will be described in detail with reference to the drawings. Fig. 1 is a block diagram showing a structure of a device for supporting document preparation according to the present invention.

In Fig. 1, numeral 1 is a document base for storing basic elements used in preparing a document, a model document and the like, and numeral 2 is conversion means for mutually converting multi media including character strings, images, voices and the like. For example, the character strings can be converted into the voices by this conversion means 2. Numeral 3 is communication means for coupling the device according to the present invention to another device. Numeral 4 is proofreading and revision means for proofreading and revising a document prepared. Numeral 5 is display means such as a CRT. Numeral 6 is schedule management means for managing a schedule used in preparing documents. Numeral 7 is output means such as a printer. Numeral 8 is input means such as a keyboard. Numeral 9 is a knowledge base storing know-how. knowledge and the like for producing documents. Numeral 10 is storage means such as a ROM, a RAM, a floppy disc. Numeral 11 is control means comprising a CPU or the like for controlling the above described means.

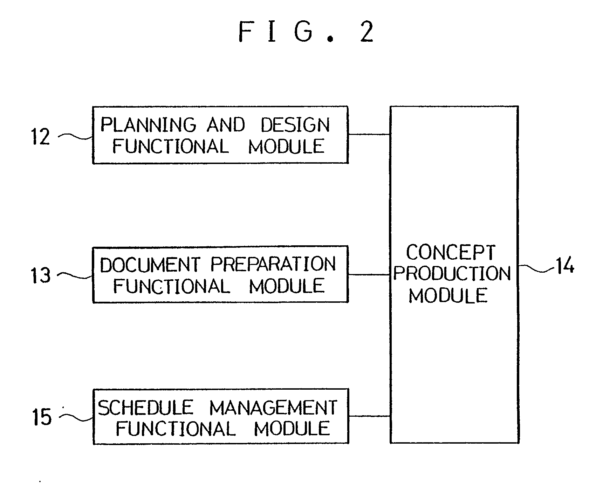

Fig. 2 is a conceptional view of a functional block according to the present invention. Functional modules shown in Fig. 2 are included in the above described control means 11.

In Fig. 2, numeral 12 is a planning and design functional module serving as planning and design means. Numeral 13 is a document preparation functional module serving as document preparation means. Numeral 14 is a concept production module serving as concept production means. Numeral 15 is a schedule management functional module serving as schedule management means. As shown in Fig. 2, the present invention is characterized In that the concept production module is coupled to the other functional module. The above described modules can be individually operated by the control means 11.

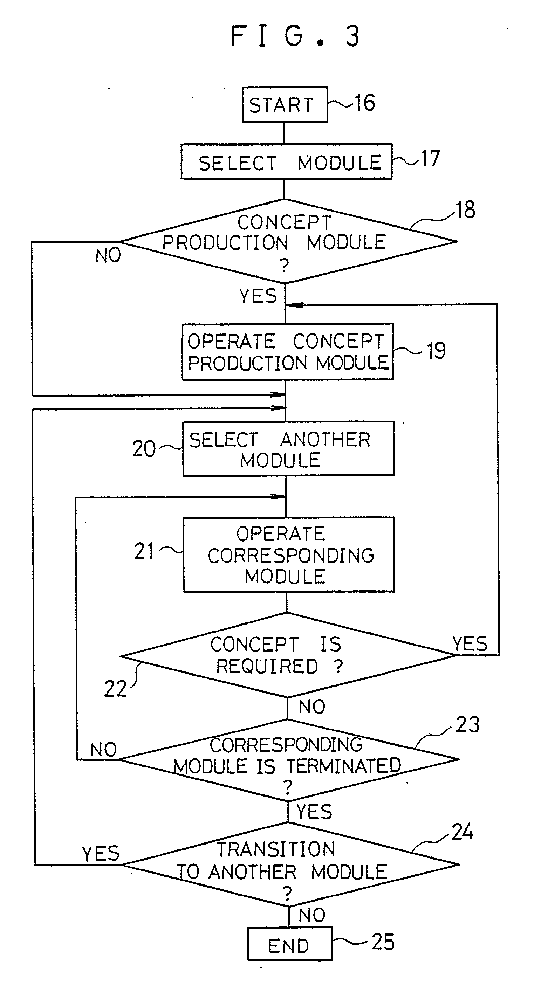

Fig. 3 is a diagram showing the flow of the whole operation of the above described conceptional view of a functional block. Numeral 16 is a block for indicating the start of the device for supporting document preparation according to the present invention. Numeral 17 is a block for selecting any one of the above described four modules. An example of a screen appearing in selecting the modules will be shown in Fig. 11. Numeral 18 is a block for determining whether or not a module selected in the block 17 is the concept production module 14. Numeral 19 is a block for operating the concept production module 14 to produce a concept by the selection in the block 18. Numeral 20 is a block for selecting modules other than the concept production module 14. More specifically, the other modules may be selected in any order. Numeral 21 is a block for operating each of the modules by the selection in the block 20. For example, documents are prepared in the document preparation functional module 13, a document to be an object is planned and designed in the planning and design functional module 12, and a schedule concerning the preparation of documents is prepared and adjusted in the schedule management functional module 15. Numeral 22 is a block for determining whether or not the concept produced in the block 19 is required in operating the modules in the block 21. Numeral 23 is a block for determining whether or not the selected module is terminated. Numeral 24 is a block for determining whether or not a module other than the module selected in the block 20 is operated. Numeral 25 is a block for terminating the operation of the device according to the present invention.

Operations of the modules will be described in detail by taking the production of a manual of an OA (office automation) device as an example.

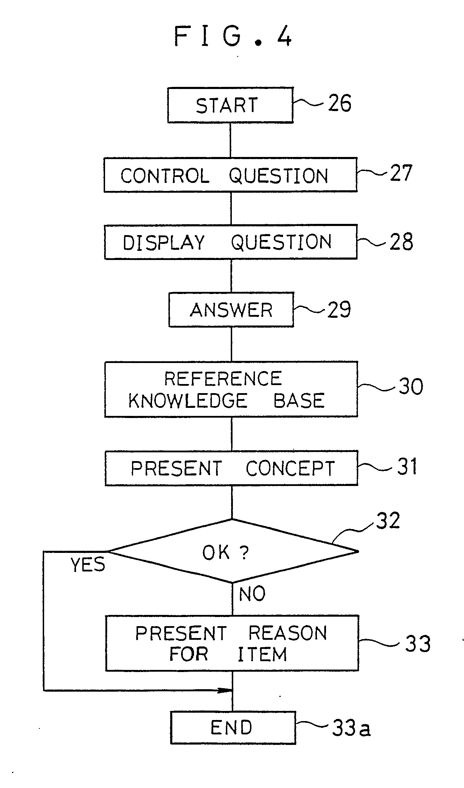

Fig. 4 is a diagram showing the schematic flow of the concept production module 14. Numeral 26 is a block for starting the concept production module 14. Numeral 27 is a block for executing control as to which question is to be displayed in producing a concept. Numeral 28 is a block for displaying the question stored in the storage means 10 in accordance with the control in the block 27. Numeral 29 is a block for inputting an answer to the question in the block 28 and preserving it. Numeral 30 is a block for referring to the knowledge base 9 preserving the knowledge and know-how concerning a method of preparing documents. Numeral 31 is a block for producing a concept on the basis of the blocks 29 and 30 and presenting it. Numeral 32 is a block for determining whether or not the reasons for the presentation in the block 31 are required. Numeral 33 is a block for presenting the reasons for items of the concept on the basis of the blocks 29 and 30 if the reasons for the presentation are required. Numeral 33a is a block for terminating the operation of the concept production module 14.

Fig. 5_a is a diagram showing an example of the display of a question. Numeral 34 is a portion where items to be selected are displayed. Numeral 35 is an example of a guidance for selection. Numeral 36 is an example of a sign for distinguishing between the guidance for selection and an input area. Numeral 37 is an input prompt where a number of an item to be selected can be inputted. Such a method of selecting items is not limited to a method of selecting items by numbers or symbols. For example, a method of directly selecting items by a cursor or a pointing device may be used. Since the same may be said of the following method of selecting items, the above described proviso should be applied when there is no particular proviso. In the following, this proviso will be omitted.

Fig. 5_b is a diagram showing another example of the display of a question. Reference numerals 38, 39, 40 and 41 respectively correspond to the reference numerals 34, 35, 36 and 37. The function of the question control block 27 is to determine which of Figs. 5_a and 5_b is to be first displayed. Various kinds of methods are established for this control. The methods are well-known techniques. Any one of the methods is employed herein to determine the order of the display.

Figs. 6_a and 6_b are diagrams respectively showing display screens on which answers to the questions shown in Fig. 5_a and 5_b are inputted. The results of the answers in Figs. 6_a and 6_b are respectively indicated at 42 and 43.

Fig. 7 is a diagram showing a concept of a stack provided in the storage means 10 for storing the answers obtained in the blocks 28 and 29. Numeral 44 is a portion in which attributes derived from the questions are stored. Numeral 45 is a portion in which attribute values derived from the answers obtained in the block 28 are stored. Although the information stored in the portions 44 and 45 are expressed by character strings in Fig. 7, it is unnecessary to stick to the expressions shown in Fig. 7 provided that the information are associated with each other by any pointer.

Fig. 8 is a diagram showing an example of the knowledge base. Numeral 46 is a knowledge (rule) associated with the answers shown in Figs. 7. More specifically, a pair of the attributes and the attribute values shown in Fig. 7 corresponds to a portion indicating the conditions between "if" and "then". Numeral 47 is a knowledge (rule) associated with the preparation of documents. Numerals 48 and 50 are respectively portions referred to as condition portions in the knowledge, and numerals 49 and 51 are respectively portions referred to as action portions indicating action on the condition portions. The various methods of expressing knowledge have been established in, for example, an expert system in knowledge information processing and therefore, it is not necessary to stick to the method shown in Fig. 8.

Fig. 9 is a diagram showing an example of the concept. This concept is obtained by referring to the knowledge base as shown in Figs. 7 and 8, which are respectively obtained as a result of question processing in the block 28 and answer processing in the block 29. More specifically, a subject and a predicate in the action portion of the knowledge base shown in Fig. 8 are respectively displayed as an item of the concept and a value of the item. In some cases the results of questions and answers are inputted as in the later items in Fig. 9. The item to be displayed is determined corresponding to the produced concept by previously writing the item of the concept to be displayed on the knowledge base. Numerals 52 are numbers given to the items of the concept, numerals 53 are items of the concept, numerals 54 are separators between the items of the concept and their values for making it easy to see the contents thereof, numerals 55 are values of the items of the concept, and numeral 56 is a guidance and a prompt for making it possible to hear the reasons for the answers of the concept. Fig. 10 shows the results obtained when the number 1 is selected in the display shown in Fig. 9 and the presentation of the reasons is found. The results can be displayed by applying an input value to the corresponding knowledge in the knowledge base shown in Fig. 8. Hatching portion 57 in Fig. 10 indicates that corresponding values are inputted.

Fig. 11 is a screen for selecting another module corresponding to the block 20 in the entire schematic flow. This screen can be made common with a screen for selecting a module in the block 17. Numeral 58 is a portion of names of module items to be selected. Numeral 59 is an example of an input guidance and prompt for selection.

While a case in which the document production functional module 13 is selected as a typical example of the other modules will be described in detail, a typical example of the use will be only described when the other modules are selected. Subdivided work items in the preparation of documents are displayed by selecting the document preparation functional module 13. This example is shown in Fig. 12. In Fig. 12, numeral 60 is the subdivided work items, and numeral 61 is an example of an input guidance and prompt. While the contents of the work items will be briefly described, the subject of the present invention will be described with respect to the making of compositions in the work items. Item "preparation of a table of contents" is a work item for preparing a whole table of contents of a manual. Item "making of compositions" is a work item for making a composition for explaining a method of operating the device or each function of the device. Item "stylebook" is a work item for producing a construction · of the document. Item "confirmation" is a work item for confirming whether or not the important points are not omitted and the the document is accurately described. Item "illustration" is a work item for laying out illustrations in the document. If the device has the function of CAD (computer aided design), the making of illustrations can be also simultaneously incorporated into the work item. Item "voice" is a work item for incorporating voices into the document. Item "compilation of an index" is a work item for compiling an index. Item "preparation of a glossary" is a work item for preparing a glossary of terms. Item "proofreading and revision" is a work item for proofreading and revising the composition.

If the item of making of compositions is selected, Figs. 13_a and 13_b are displayed. In Figs. 13_a and 13_b, numerals 62 and 64 are input guidances. and numerals 63 and 65 are inputted values.

Figs. 14_a and 14_b shows examples of the display of the preparation of documents linked to the concept of the present invention. In Fig. 14_a, numeral 66 is a general comment outputted and displayed by the device with reference to the manual concept. Furthermore, Fig. 14_b also shows a portion where levels of a style and terms are set from the manual concept. Hatching portion 67 in Fig. 14_b indicates that the levels are set.

Fig. 15 shows a portion where a dialogue is carried on as to which portion in the manual a composition begins with. In Fig. 15 a mark "←" 68 indicates that character strings from this mark to a mark "→" 69 are a guidance outputted from the device. Moreover, a mark "→" indicates that character strings from this mark to a mark "←" are inputted by a user of the device.

Fig. 16 shows examples of candidates of the table of contents called out of the document base 1. Numerals 70 and 71 are respectively titles, which indicates that a first candidate and another candidate are displayed below the titles. Numeral 72 is an example of a first candidate of the table of contents. and numeral 73 is an example of another candidate thereof. In this example, various levels of compositions are applicable in a case where a composition is prepared by taking the table of contents as a unit. More specifically, there exist characters, clauses, paragraphs, sentences, words and the like in the composition. If the composition is associated with a unit of storage of the document base 1, stored in a small unit and stored in a constructed manner, it can be set in any unit. Numeral 74 is an example of a dialogue.

Fig. 17 shows an example of a document retrieved from the document base 1 and displayed.

Numerals 75 is an example of a composition in the document base 1. This composition is made to satisfy the conditions for, for example, a value of the percentage of Chinese characters in the concept. For example, if an answer of a user is different from the composition, a composition as indicated at 76 is displayed with respect to the same item.

Figs. 18a and 18b are diagrams showing the flow from Fig. 11 to Fig. 17. Numeral 77 is a start block of this work. Numeral 78 is a block for opening the screen for selecting modules to select the document preparation functional module 13. Numeral 79 is a block for selecting and setting the name of work to be actually performed from a screen for selecting the subdivided work items of the document preparation functional module 13. Numeral 80 is a block for determining whether or not the work item of the making of compositions used in the present description is selected. Numeral 92 is a block for setting and performing the other subdivided work items when work other than the making of compositions is selected. Numeral 81 is a block, associated with the following preparation of documents, for inputting the name of a model of a device to be an object of the manual. Numeral 82 is a block for inputting the name of a model of approximate specifications so as to retrieve a composition from the document base 1. Numeral 83 is a block for referring to the concept. Numeral 84 is a block for setting levels of a style and terms to be restrictions in making compositions from the concept and presenting a guidance. Numeral 85 is a block for determining the order of making compositions. Numeral 86 is a block for referring to the concept again. If information is referred to at a time and stacked in the block 86 simultaneously with in the block 83, the block 86 can be included in the block 83. Numeral 87 is a block for retrieving a composition determined according to the above described procedure from the document base i and displaying it. Numeral 88 is a block for confirming the displayed composition and determining whether or not it should be taken in a manual to be prepared. Numeral 90 is a block for completing the making of compositions when the displayed composition is satisfactory. When the composition displayed in the block 88 is not satisfactory, it is determined whether or not it is used after being partly modified. Numeral 89 is a block for the determination and modification. If the modification is not made, the device is asked whether or not there is another candidate, to determine whether or not the other candidate is available. Numeral 91 is a block for this processing. Numeral 93 is a block for indicating the termination of the blocks for making compositions.

Description is now made of how a composition in the document base 1 is retrieved and displayed in the above described blocks. Fig. 19 shows an example of a method of storing compositions in the document base 1. Numerals 94, 95, 96, 97, 98, 99 and 100 are respectively a level of terms, a level of a style, a user. a pointer to data on a table of contents, a pointer to a guidance, information on a construction, and a pointer to a composition. They are information selected from ones appeared in the foregoing description of the flowchart. Accordingly, even if there are information other than the above information or the above information are not arranged in this order, the operation is not affected. Destinations of the pointers to be jumped are in the document base 1. In the document base 1, tables of contents and compositions are preserved. By comparing stacks respectively storing the information and the concept, the corresponding table of contents, guidance and composition can be retrieved. Description is now made of how the terms can be selected provided that information on the level of terms is determined in the above described manner, which is shown in Fig. 20. Numeral 101 is a header represented by characters "manual concept" by way of example. Numerals 102, 103 and 104 are respectively information on pointers for distinguishing a beginner, a person of the middle class and a senior person in writing with respect to the header. A blank space indicates that the header is of the corresponding rank. When the header represented by the pointer for the person of the middle class is referred to, the header "basic frame of manual" can be drawn, as indicated at 105. Description was made of an example in which terms are changed depending on the value of the concept.

The operations of the functional modules other than the document preparation functional module 13 will be briefly described. In the schedule management functional module 15, for example, a construction of a manual to be prepared and the amount of compositions in the manual selected in the process of the manual concept, planning and design are determined. Since the order of work and working hours in each of the work processes are stored in the knowledge base 9, the work processes and the critical pass, and the like for preparing a document by the appointed day can be outputted with reference to the stored order of work and working hour. A PERT (program evaluation and review technique) method can be utilized to adjust the schedule. Also in this case, the present invention allows support so as to perform work concerned deeply with the concept and meeting the conditions for restrictions of the concept.

Furthermore, in the planning and design functional module 12, the present invention allows support for selection of the amount of compositions in the entire manual, the assignment of the number of pages for each chapter and clause and portions having characteristics to be emphasized, items by users, and the like in accordance with the concept.

As described in the foregoing, the present invention is characterized in that the document can be efficiently prepared while satisfying the conditions for restrictions concerning the device and the manual.

The present invention is effective in that the concept production, document preparation, schedule management, and planning and design functional modules can be independently operated and a document for achieving the purpose can be uniformly prepared by utilizing the concept in common.

The present invention is effective in that support can be provided as to which portion is to be written and how it is to be written.

The present invention is also effective in that a document can be prepared while comparing changed portions of the document with each other.

Additionally, the present invention is also effective in that compositions are unified by the concept when a lot of persons are concerned with the preparation of documents, so that a document of good quality can be prepared, thereby causing a period during which the document is prepared to be shortened.

## Claims

1. A device for supporting document preparation comprising input means (8) for inputting character strings; display means (5) for displaying the character strings inputted by the input means; storage means (10) for storing the character strings inputted by the input means (8); a knowledge base (9) for storing knowledge for producing guide lines used in preparing documents; a document base (1) for storing basic elements in compositions; and control means (11) for controlling the input means (8), the display means (5), the storage means (10), the knowledge base (9) and the document base (1), said control means (11) comprising concept production means (14) for producing a guide line used in preparing documents using the knowledge stored in the knowledge base (9) on the basis of the character strings inputted from the input means (8), document preparation means (13) for calling out the basic elements in the compositions stored in the document base (1) and supporting the preparation of a document in accordance with the guide line produced by the concept production means (14), a schedule management means (15) for managing a schedule used in preparing documents in accordance with the guide line produced, and planning and design means (12) for planning and designing an entire construction of the document in accordance with the guide line produced.

2. The device according to claim 1, wherein said storage means (10) further stores various conditions concerning the document, and said concept production means (14) causes the display means (5) to display the conditions stored in the storage means (10) such that the character strings can be inputted from the input means (8) corresponding to the conditions in a dialog manner.

3. The device according to claim 2, wherein said concept production means (14) produces a rule used in producing a guide line from the conditions displayed by the display means (5) and the character strings inputted form the input means (8) corresponding to the conditions using the knowledge stored in the knowledge base (9), to produce the guide line on the basis of the rule.

4. The device according to claim 1, which further comprises graphic input means for inputting graphics or images, and wherein said control means (11) exercises control to lay out the graphics or images inputted form the graphic input means in the document to be prepared and causes the display means (5) to display them.

5. The device according to claim 1, which further comprises voices input means for inputting voices, and wherein said control means (11) control to incorporate the voices inputted form the voice input means into the document.

6. The device according to claim 4, which further comprises voice input means for inputting voices, and wherein said control means (11) executes control to incorporate the voices inputted form said voice input means (8) into the document.

FIG. 1

# FIG. 2

12 —— | PLANNING AND DESIGN FUNCTIONAL MODULE |

13 —— | DOCUMENT PREPARATION FUNCTIONAL MODULE |

15 —— | SCHEDULE MANAGEMENT FUNCTIONAL MODULE |

| CONCEPT PRODUCTION MODULE | —— 14

EP 0 361 366 A2

SHARP K.K.
JS/EP/SP-254

# FIG. 3

START ~16

SELECT MODULE ~17

CONCEPT PRODUCTION MODULE ? ~18

NO / YES

OPERATE CONCEPT PRODUCTION MODULE ~19

20~ SELECT ANOTHER MODULE

21~ OPERATE CORRESPONDING MODULE

22~ CONCEPT IS REQUIRED ?

YES

NO

23 CORRESPONDING MODULE IS TERMINATED ?

NO

YES

24 TRANSITION TO ANOTHER MODULE ?

YES

NO

END ~25

SHARP K.K.
OS/EP/SP-254

# F I G . 4

```
            ┌─────────────────┐
            │     START        │~26
            └─────────────────┘
                     │
            ┌─────────────────┐
            │ CONTROL QUESTION │~27
            └─────────────────┘
                     │
            ┌─────────────────┐
            │ DISPLAY QUESTION │~28
            └─────────────────┘
                     │
                ┌──────────┐
                │  ANSWER  │~29
                └──────────┘
                     │
         ┌──────────────────────┐
         │      REFERENCE        │~30
         │   KNOWLEDGE   BASE    │
         └──────────────────────┘
                     │
         ┌──────────────────────┐
         │  PRESENT   CONCEPT    │~31
         └──────────────────────┘
                     │
                    ╱ ╲            ~32
          YES     ╱     ╲
        ┌───────<   OK ?  >
        │         ╲     ╱
        │           ╲ ╱ NO
        │            │
        │   ┌──────────────────────┐
        │   │  PRESENT   REASON     │~33
        │   │    FOR    ITEM        │
        │   └──────────────────────┘
        │            │
        └───────────>│
                     │
                ┌──────────┐
                │   END    │~33a
                └──────────┘
```

## FIG. 5_a

1.WORD PROCESSOR 　　2.ELECTRONIC 　　　　3.FACSIMILE
　　　　　　　　　　　　　　　 POCKETBOOK

4.ECR 　　　　　　　　　5.COPYING MACHINE 　6.PERSONAL
　　　　　　　　　　　　　　　　　　　　　　　　 COMPUTER

7.OFFICE COMPUTER

INPUT NUMBER OF CORRESPONDING TYPE :

## FIG. 5_b

1.SENIOR PERSON 　　　2.PERSON OF 　　　　3.BEGINNER
　　　　　　　　　　　　　　　 MIDDLE CLASS

4.MANIAC/FULL-TIME 　5.GENERAL OFFICE 　6.GENERAL TECHNICAL
　　　 OPERATOR 　　　　　　 WORKER 　　　　　　 WORKER

7.FIELD KNOWLEDGE 　8.STUDENT 　　　　　9.UNSPECIFIED MASSES
　　　 POSSESSOR

WHO IS MAIN USER ? 　INPUT NUMBER :
(A PLURALITY OF NUMBERS CAN BE INPUTTED USING COMMAS)

EP 0 361 366 A2

## FIG.6_a

1. WORD PROCESSOR  2. ELECTRONIC POCKETBOOK  3. FACSIMILE

4. ECR  5. COPYING MACHINE  6. PERSONAL COMPUTER

7. OFFICE COMPUTER

INPUT NUMBER OF CORRESPONDING TYPE : 1

## FIG.6_b

1. SENIOR PERSON  2. PERSON OF MIDDLE CLASS  3. BEGINNER

4. MANIAC/FULL-TIME OPERATOR  5. GENERAL OFFICE WORKER  6. GENERAL TECHNICAL WORKER

7. FIELD KNOWLEDGE POSSESSOR  8. STUDENT  9. UNSPECIFIED MASSES

WHO IS MAIN USER ?  INPUT NUMBER : 3
(A PLURALITY OF NUMBERS CAN BE INPUTTED USING COMMAS)

EP 0 361 366 A2

IARP K.K.
5/EP/SP-254

EP 0 361 366 A2

EP/SP-254

# FIG. 7

|  | 44 | | 45 | |
|---|---|---|---|---|
| NAME OF TYPE OF MACHINE | | WORD PROCESSOR | | |
| MAIN USER | | BEGINNER | | |
| SELLING PRICE OF DEVICE | | < 100,000 | | |

# FIG. 8

48 {

IF
    TYPE OF MACHINE IS WORD PROCESSOR,
    MAIN USER IS BEGINNER,
    AND SELLING PRICE OF DEVICE IS  < 100,000,
THEN

49 {

    SIZE OF MANUAL IS CAUSED TO BE A4 SIZE
    AND INTRODUCTION AND FUNCTION EDITINGS ARE COLLECTED
    INTO SINGLE VOLUME

50 {

IF
    TYPE OF MACHINE IS WORD PROCESSOR
    AND MAIN USER IS BEGINNER,
THEN

51 {

    USE PERCENTAGE OF KANJI IN DOCUMENT IS DECREASED TO 30%
    OR LESS AND TERMS TO BE USED ARE CAUSED TO BE ONES FOR BIGINNERS

# FIG.9

```
52      53              54          55

1.CONSTRUCTION              :INTRODUCTION AND FUNCTION EDITINGS
                              ARE COLLECTED INTO SINGLE VOLUME
2.SIZE                      :A4 SIZE
3.NUMBER OF PAGES           :220 ~ 250
4.NUMBER OF CHARACTERS      :100,000
5.USE PERCENTAGE OF KANJI   :30 % OR LESS
6.NUMBER OF ILLUSTRATIONS   :300  OR MORE
7.COLOR                     :THREE COLORS OF MORE
8.MAIN  USER               :BEGINNER
9.LAST APPOINTED DATE       :SEPTEMBER  26,1988

56        IF EXPLANATION  IS  REQUIRED, INPUT  NUMBER : _
```

# FIG.10

```
                                          57

IF
    TYPE OF MACHINE IS WORD  PROCESSOR,              48
    MAIN  USER  IS  BEGINNER,
    AND SELLING PRICE OF DEVICE IS  69,800
46
THEN
    SIZE OF MANUAL IS CAUSED  TO BE A4 SIZE
    AND INTRODUCTION AND FUNCTION EDITINGS          49
    ARE COLLECTED  INTO SINGLE  VOLUME
```

EP 0 361 366 A2

K.K.
'SP-254

## F I G.11

58 {
```
     1. CONCEPT PRODUCTION
     2. PLANNING AND DESIGN
     3. SCHEDULE MANAGEMENT
     4. DOCUMENTATION
```

59 — INPUT NUMBER : _

## F I G.12

```
1. PREPARATION OF        2. MAKING OF         3. STYLEBOOK
   TABLE OF CONTENTS         COMPOSITION

4. CONFIRMATION          5. ILLUSTRATION      6. VOICE

7. INDEX                 8. GLOSSARY          9. PROOFREADING
                                                 AND REVISION
```

61 — INPUT NUMBER :

EP 0 361 366 A2

RP K.K.
EP/SP-254

## FIG.13_a

INPUT MODEL NAME OF DEVICE CORRESPONDING
TO MANUAL TO BE PRODUCED :

WD_10000 — 63
<br>} 62

## FIG.13_b

INPUT MODEL NAME OF DEVICE CLOSEST TO
SPECIFICATION OF PRESENT DEVICE :

WD_9000 — 65
<br>} 64

EP 0 361 366 A2

FARP K.K.
)/EP/SP-254

## FIG.14_a

PRESENT COMMODITY BASED ON MANUAL CONCEPT IS

MAINLY USED BY BEGINNERS.

IT IS IMPORTANT TO WRITE MANUAL TO BE USED BY

BEGINNERS AS IF THEY ARE TALKED TO IN KINDLY TERMS.

ONE EXAMPLE IS AS FOLLOWS.

PUSH RETURN KEY.

} 66

## FIG.14_b

ACCORDING TO MANUAL CONCEPT

LEVEL OF STYLE  SOFT  ORDINARY  HEAD

LEVEL OF TERMS  KINDLY  ORDINARY  TECHNICAL

ONE EXAMPLE IS AS FOLLOWS.

PUSH RETURN KEY.

67

EP 0 361 366 A2

# FIG. 15

EP 0 361 366 A2

```
←  IS PRODUCT OF UNITED TYPE ?
                   1. YES        2. NO
←  1


←  TABLE OF CONTENTS IS DRAWN UP.
   ONE EXAMPLE IS AS FOLLOWS.
   IS IT ALL RIGHT ?
   1. YES        2. DISPLAY ANOTHER EXAMPLE        3. MODIFY
←  1


←  COMPOSITION IS MADE
   MAY COMPOSITION BE MADE IN ORDER CORRESPONDING TO
   TABLE OF CONTENTS ?
   1. YES        2. NO        3. END
←  1
```

68

69

SHARP K.K.
OS/EP/SP-254

## FIG.16

| CANDIDATE | ANOTHER EXAMPLE |
|---|---|
| 1. INTRODUCTION<br>2. THIS INSTRUCTION MANUAL··<br><br>3. PAY PARTICULAR<br>   ATTENTION TO···<br>              ⋮ | 1. INTRODUCTION<br>2. PAY PARTICULAR<br>   ATTENTION TO···<br>3. LET'S BEGIN BY WRITING<br><br>              ⋮ |

IS IT ALL RIGHT ?
 1. YES  2. DISPLAY ANOTHER EXAMPLE  3. ADD/MODIFY  4. END
INPUT  NUMBER : _

## FIG.17

THANK YOU FOR YOUR BUYING WORD PROCESSOR "WD-10000"
OF  A Co.
   FEATURES OF THIS DEVICE ARE THAT BASIC FRAME OF MANUAL···

THANK YOU FOR YOUR BUYING WORD PROCESSOR "WD-10000"
OF  A Co.
   FEATURES OF THIS DEVICE ARE THAT MANUAL CONCEPT···

EP 0 361 366 A2

SHARP K.K.
OS/EP/SP-254

# FIG.18a

## FIG.18 b

A

85 — DISPLAY ITEM
OF ORDER OF
MAKING
COMPOSITION

86 — REFERENCE CONCEPT

87 — RETRIEVE FROM
DOCUMENT BASE
AND DISPLAY

88 — SELECT
CANDIDATE
?

NO

YES

91 — RETRIEVE AND
DISPLAY
ANOTHER
EXAMPLE

ADD /
MODIFY
?

NO

YES

89

90 — COMPLETE
MAKING OF
COMPOSITION

93 — END

## FIG.19

| BEGINNERS' CLASS | EXPRESSION | BEGINNER | A | B | 1. | C |
|---|---|---|---|---|---|---|
| 94 | 95 | 96 | 97 | 98 | 99 | 100 |

## FIG.20

101          102   103   104

| MANUAL CONCEPT | | B | C |
|---|---|---|---|

A

B

| BACIC FRAME OF MANUAL | A | | C |
|---|---|---|---|

105

EP 0 361 366 A2

XP K.K.
XP/SP-254